# EUROPEAN PATENT SPECIFICATION

(11) **EP 3 615 776 B1**
(45) Date of publication and mention of the grant of the patent: **24.02.2021**
(21) Application number: 17726007.2
(22) Date of filing: 28.04.2017
(51) Int. Cl.: F01N 3/20, F01N 3/28, F01N 1/00

(54) **NOISE ATTENUATOR AND METHOD OF INTRODUCING REDUCING AGENT INTO EXHAUST GAS STREAM**
SCHALLDÄMPFER UND VERFAHREN ZUM EINBRINGEN EINES REDUKTIONSMITTELS IN EINEN ABGASSTROM
ATTÉNUATEUR DE BRUIT ET PROCÉDÉ D'INTRODUCTION D'AGENT RÉDUCTEUR DANS UN FLUX DE GAZ D'ÉCHAPPEMENT

(43) Date of publication of application: 04.03.2020
(73) Proprietor: Wärtsilä Finland Oy, 65100 Vaasa (FI)
(72) Inventor: HAMMARSTRÖM, David, 65100 Vaasa (FI); NOUSIAINEN, Esa, 65100 Vaasa (FI); PELTOKOSKI, Raine, 65100 Vaasa (FI); KORHONEN, Satu, 65100 Vaasa (FI)
(74) Representative: Berggren Oy, Helsinki & Oulu
(86) International application number: PCT/FI2017/050330
(87) International publication number: WO 2018/197741

(56) References cited:
- EP-A1- 2 388 451
- EP-A2- 1 760 284
- WO-A1-2012/050509
- WO-A1-2013/154573
- US-A1- 2010 005 791
- US-A1- 2017 107 877

## Description

### Technical field of the invention

The present invention relates to a noise attenuator for an exhaust system of an internal combustion engine in accordance with claim 1. The invention also concerns a method of introducing reducing agent into exhaust gas stream of an internal combustion engine for selective catalytic reduction, as defined in the other independent claim. The invention further concerns an exhaust system for an internal combustion engine.

### Background of the invention

Nitrogen oxide (NOₓ) emissions of internal combustion engines in ships and power plants are a growing concern and subject to continuously tightening regulations set by the International Maritime Organization (IMO) and other legislative bodies. To a certain extent, the requirements set by different regulations can be met by means that are directly related to the operation of the engine, such as exhaust gas recirculation, high fuel injection pressures in diesel engines, water injection into the air intake duct etc. However, many engine-related measures for reducing NOₓ emissions have a negative effect on the fuel efficiency, and they are not adequate for meeting the most stringent emission limits. For ultimate NOₓ reduction, selective catalytic reduction (SCR) is needed. With the SCR, NOₓ reductions of up to 90% or even greater can be achieved.

In an SCR system a catalyst material and reducing agent are used to decompose the NOₓ that is formed during the combustion. In a typical SCR system, the catalyst is arranged on the surface of a supporting ceramic material that forms a honeycomb structure inside a reactor. On the surface of the catalyst, the NOₓ reacts with ammonia that is used as the reducing agent and nitrogen and water is formed. In practice, urea is often used instead of ammonia for safety reasons. This applies especially to marine applications, where leaking ammonia is a serious hazard. Urea is injected into the exhaust gas flow in an aqueous solution. Due to the high temperature of the exhaust gas, water evaporates and the urea molecules break up into ammonia and carbon dioxide.

For achieving effective NOₓ reduction and minimized usage of urea, as well as for minimizing ammonia slip through the SCR system, effective mixing of the urea with the exhaust gas flow is essential. Sufficient mixing can be achieved via many different ways. For instance, in one prior art solution, mixing of the reducing agent and exhaust gas has been improved by arranging a relatively long exhaust duct section between the point of urea injection and the catalyst elements. Another known solution is to guide part of the exhaust gas stream into a by-pass duct that is arranged upstream from the catalytic converter, and to mix the reducing agent with exhaust gases in the by-pass duct. In both types of the above mentioned constructions, there needs to be enough space before the catalytic converter for accommodating the pipes where the reducing agent is mixed with the exhaust gas. This may be a problem especially in ships, where the available space is limited. Another problem is that the increased thermal efficiency of modern medium- and slow-speed engines leads to low exhaust temperatures. If the catalytic converter is placed far from the engine, low temperature of the exhaust gases may have a negative effect on the functioning of the catalytic converter. Constructions that are used for facilitating mixing of the reducing agent can also have other negative effects. For instance they can cause pressure losses in the exhaust: system.

The publication EP2388451A1 discloses another known example of a reducing agent injection arrangement of an exhaust system.

Still another solution for ensuring good mixing of the exhaust gas and reducing agent is to inject the reducing agent upstream from a turbine of a turbocharger and to place the catalytic converter on the downstream side of the turbocharger. Also this solution has some drawbacks. The high pressure and temperature of the exhaust gases causes a risk of clogging of the injectors and crystallization of the urea. In addition, the turbine is exposed to erosion if it is hit by liquid droplets.

### Summary of the invention

The aim of the present invention is to solve or reduce the problems mentioned above. An object of the invention is therefore to provide for an exhaust system of an internal combustion engine a noise attenuator, which comprises means for introducing reducing agent into exhaust gas stream. The characterizing features of the noise attenuator according to the invention are given in claim 1. Another object of the invention is to provide a method of introducing reducing agent into exhaust gas stream of an internal combustion engine for selective catalytic reduction. The characterizing features of the method are given in the other independent claim.

The noise attenuator according to the invention comprises a casing, an inner wall defining a cylindrical space within the casing, the axial direction of the cylindrical space corresponding to the principal flow direction of exhaust gas in the noise attenuator, an inner pipe that is arranged coaxially with the inner wall so that a first flow path with an annular cross-section is formed between the inner wall and the inner pipe for exhaust gas stream, and a flow barrier with a circular cross-section, the flow barrier being arranged coaxially with the inner pipe so that a second flow path with an annular cross-section is formed between the inner pipe and the flow barrier for exhaust gas stream. The noise attenuator is provided with at least one nozzle for introducing reducing agent into exhaust gas stream, the at least one nozzle being arranged in the flow direction of exhaust gas downstream from the inner pipe and/or the flow barrier.

The method according to the invention comprises a step of introducing exhaust gas stream into a noise attenuator, which noise attenuator is configured to divide the exhaust gas stream into at least two coaxial ring-shaped partial streams and to further merge the partial streams back into a single exhaust gas stream. The reducing agent is injected into the exhaust gas stream in the area where the partial streams are merged.

With the noise attenuator and the method according to the invention, reducing agent is effectively evaporated and mixed with exhaust gas.

According to an alternative of the invention, the noise attenuator comprises at least one central nozzle for introducing reducing agent into exhaust gas stream, which central nozzle is arranged in the area of an imaginary extension of the flow barrier in the flow direction of exhaust gas. The reducing agent can thus be injected into an area which is surrounded by the exhaust gas flow leaving the second flow path. The flow speed of exhaust gas in this area is very low. The surrounding flow effectively prevents undesired dispersion of the reducing agent spray.

According to an alternative of the invention, the noise attenuator comprises a plurality of outer nozzles for introducing reducing agent into exhaust gas stream, which outer nozzles are arranged in the area of an imaginary extension of the inner pipe in the flow direction of exhaust gas. This area is between the exhaust gas streams leaving the first flow path and the second flow path. The flow speed of exhaust gas in this area is very low. The outer exhaust gas stream effectively prevents contact of the reducing agent with the walls of the noise attenuator.

According to an embodiment of the invention, the outer nozzles are configured to spray reducing agent outwards from the longitudinal axis of the noise attenuator. Preferably, the angle between the longitudinal axis and the spraying direction is at least 45 degrees. By spraying the reducing agent towards the walls of the noise attenuator, better mixing of the reducing agent and the exhaust gas is achieved.

The flow barrier can be an elongated element, such as a bar or a closed pipe. An exhaust system according to the invention comprises a catalytic converter for selective catalytic reduction and a noise attenuator defined above arranged on the upstream side of the catalytic converter.

According to an embodiment of the invention, in the method of introducing reducing agent into exhaust gas stream, reducing agent is injected into the exhaust gas stream at a location, which is in the radial direction of the noise attenuator in the middle of the exhaust gas stream. The reducing agent is thus injected at a location, where the flow speed of the exhaust gas is low and the inner partial stream forms a shielding flow surrounding the injection point.

According to an embodiment of the invention, reducing agent is injected into the exhaust gas stream at a plurality of locations, which are in the radial direction of the noise attenuator between the partial streams. The reducing agent is thus injected at a location, where the flow speed of the exhaust gas is low and the partial streams guide the reducing agent flow.

### Brief description of the drawings

Embodiments of the invention are described below in more detail with reference to the accompanying drawings, in which
Fig. 1 shows schematically an exhaust system of an internal combustion engine,
Fig. 2 shows a cross-sectional view of a noise attenuator according to an embodiment of the invention, and
Fig. 3 shows a cross-sectional view of the noise attenuator of figure 2 taken along line A-A.

### Description of embodiments of the invention

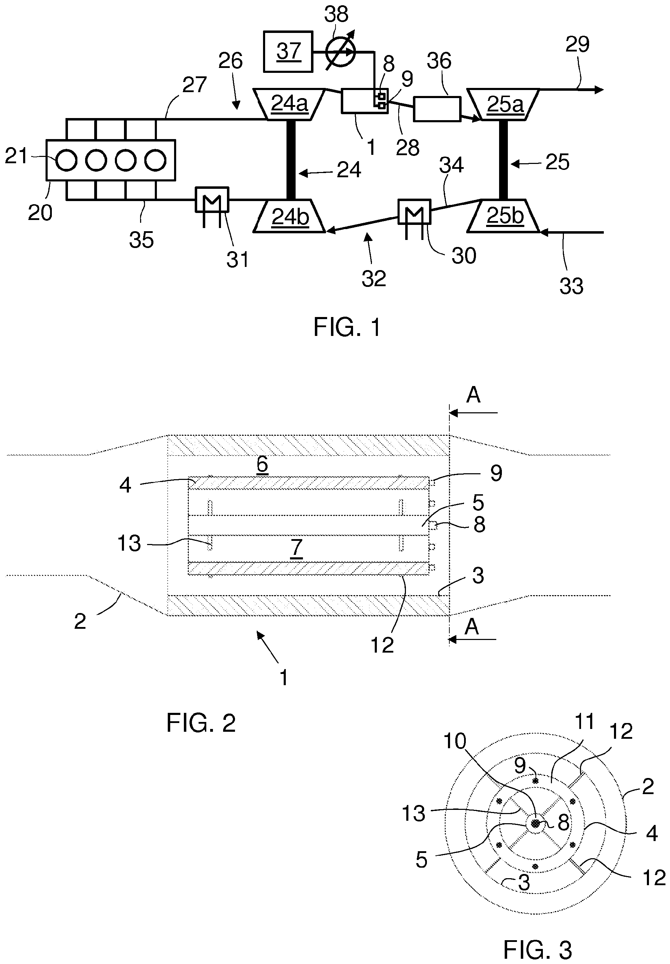

In figure 1 is shown schematically a large piston engine 20 with a selective catalytic reduction (SCR) system. The engine 20 can be, for instance, a main or an auxiliary engine of a ship or an engine that is used for producing electricity at a power plant. Four cylinders 21 are shown in figure 1, but the engine 20 can comprise any reasonable number of cylinders 21 that are arranged, for instance, in line or in a V-configuration. The engine 20 is provided with an exhaust system that comprises a high-pressure turbocharger 24 and a low-pressure turbocharger 25 that are connected in series. The turbine 24a of the high-pressure turbocharger 24 is arranged to receive exhaust gases from the engine 20. From the high-pressure turbocharger 24, exhaust gases are conducted to the turbine 25a of the low-pressure turbocharger 25. The exhaust system further comprises an exhaust duct 26 for conducting exhaust gases out of the cylinders 21 of the engine 20. The exhaust duct 26 comprises an exhaust manifold 27 that connects the cylinders 21 of the engine 20 to the turbine 24a of the high-pressure turbocharger 24, an intermediate exhaust duct 28 for connecting the turbine 24a of the high-pressure turbocharger 24 to the turbine 25a of the low-pressure turbocharger 25, and a low-pressure exhaust duct 29 for conducting the exhaust gases from the turbine 25a of the low-pressure turbocharger 25 out of the engine room.

The intake air of the engine 20 is pressurized first by the compressor 25b of the low-pressure turbocharger 25. From the low-pressure turbocharger 25, the intake air is conducted to the compressor 24b of the high-pressure turbocharger 24 for further increasing the pressure of the intake air. A first charge-air cooler 30 is arranged between the compressors 25b, 24b of the low-pressure turbocharger 25 and the high-pressure turbocharger 24. A second charge-air cooler 31 is arranged downstream from the compressor 24b of the high-pressure turbocharger 24. The intake air is introduced into the cylinders 21 of the engine 20 in an intake duct 32. The intake duct 32 comprises a low-pressure intake duct 33 for introducing the intake air into the compressor 25b of the low-pressure turbocharger 25, an intermediate intake duct 34 for conducting the intake air from the compressor 25b of the low-pressure turbocharger 25 to the compressor 24b of the high-pressure turbocharger 24, and an intake manifold 35 that connects the compressor 24b of the high-pressure turbocharger 24 to the cylinders 21 of the engine 20.

The engine 20 is provided with a catalytic converter 36 for selective catalytic reduction (SCR). In the example of figure 1, the catalytic converter 36 is arranged between the turbines 24a, 25a of the high-pressure turbocharger 24 and the low-pressure turbocharger 25. Between the turbines 24a, 25a of the turbochargers 24, 25, the exhaust temperature is typically sufficiently high for SCR. However, depending on the engine 20, the catalytic converter 36 could also be located differently in the exhaust system, for instance on the downstream side of the low-pressure turbocharger 25.

Selective catalytic reduction requires reducing agent that is mixed with the exhaust gas before passing the exhaust gas through the catalyst material in the catalytic converter 36. Typically, the reducing agent is urea that is in form of an aqueous solution. The urea is stored in a reducing agent tank 37. The reducing agent is introduced into the exhaust gas stream by means of a pump 38. The pump 38 delivers the reducing agent to one or more nozzles 8, 9, which inject the reducing agent into the exhaust gas stream so that the reducing agent is mixed with the exhaust gas before the exhaust gas is introduced into the catalytic converter 36.

The exhaust system further comprises a noise attenuator 1. The exhaust gas is arranged to flow through the noise attenuator 1. The noise attenuator 1 is arranged upstream from the catalytic converter 36. In the example of figure 1, the noise attenuator 1 is arranged between the turbines 24a, 25a of the turbochargers 24, 25. However, depending on the location of the catalytic converter 36, the noise attenuator 1 could also be located differently in the exhaust system.

Figure 2 shows a cross-sectional view of a noise attenuator 1 according to an embodiment of the invention. Figure 3 shows a cross-sectional view taken along line A-A of figure 2. The exhaust gas stream discharged from the high-pressure turbocharger 25 is non-uniform. The noise attenuator 1 converts the non-uniform flow into a more uniform flow. The noise attenuator 1 divides the exhaust gas stream into at least two coaxial ring-shaped partial streams and further merges the partial streams back into a single exhaust gas stream, which has a relatively uniform flow profile. The noise attenuator 1 comprises a casing 2. The casing 2 can be made of steel or some other suitable material. The noise attenuator 1 further comprises an inner wall 3, which defines a cylindrical space within the casing 2. The inner wall 3 can be formed by the casing 2. However, in the embodiment of the figures, the inner wall 3 is formed by a separate pipe that is arranged within the casing 2.

The axial direction of the cylindrical space corresponds to the principal flow direction of the exhaust gas in the noise attenuator 1. In practice, the flow profile of the exhaust gas in the noise attenuator 1 is not completely uniform and the flow direction is not exactly parallel to the axial direction of the noise attenuator 1. The noise attenuator 1 comprises an inner pipe 4, which is arranged coaxially with the inner wall 3 so that a first, outer flow path 6 is formed between the inner wall 3 and the inner pipe 4. The inner pipe 4 has a smaller diameter than the inner wall 3. The first flow path 6 has an annular or ring-shaped cross-section in the flow direction of exhaust gas. The inner pipe 4 is supported against the inner wall 3 by means of support bars 12. However, the inner pipe 4 could be supported also by some other kind of support means. The noise attenuator 1 also comprises a flow barrier 5. The flow barrier 5 has a circular cross-section and it is arranged coaxially with the inner pipe 4. It has a smaller diameter than the inner diameter of the inner pipe 4. A second, inner flow path 7 is formed between the inner pipe 4 and the flow barrier 5. Also the second flow path 7 has an annular or ring-shaped cross-section in the flow direction of exhaust gas. The flow barrier 5 is supported against the inner pipe 4 by means of support bars 13. The flow barrier 5 could also be supported by some other kind of support means. It could also be supported against the inner wall 3 of the noise attenuator 1 or against the casing 2 instead of or in addition to the inner pipe 4.

Each of the inner pipe 4 and the flow barrier 5 is configured to form an area of reduced exhaust gas flow speed on its downstream side. The inner pipe 4 has therefore a certain wall thickness for clearly separating the inner partial stream from the outer partial stream. The inner pipe 4 can be a double-wall pipe. Similarly, the flow barrier 5 has a certain diameter for making the inner partial stream ring-shaped.

A noise attenuator 1 according to the invention comprises at least one nozzle 8, 9 for introducing reducing agent into the exhaust gas stream. The nozzle 8, 9 is arranged on the downstream side of the inner pipe 4 and/or the flow barrier 5. The exhaust gas flow entering the noise attenuator 1 is non-uniform. As the exhaust gas flows through the first flow path 6 and the second flow path 7 of the noise attenuator 1, a more uniform flow profile is achieved. By injecting the reducing agent into the uniform flow at the downstream end of the noise attenuator 1, effective mixing and evaporation of the reducing agent is achieved.

In the embodiment of the figures, the noise attenuator 1 comprises a central nozzle 8 that is arranged in the area of an imaginary extension of the flow barrier 5. The central nozzle 8 is thus in an area that is covered by the flow barrier 5 as seen from the flow direction of the exhaust gas. The noise attenuator 1 further comprises a plurality of outer nozzles 9 that are arranged in the area of an imaginary extension of the inner pipe 4. The outer nozzles 9 are thus arranged in an area that is covered by the inner pipe 4 as seen from the flow direction of the exhaust gas. As the exhaust gas flows through the first flow path 6 and the second flow path 7, the flow speed is nearly uniform. Immediately downstream from the inner pipe 4 and the flow barrier 5, an inner wake zone is formed in the area 10 covered by the flow barrier 5 and an outer wake zone is formed in the area 11 covered by the inner pipe 4. In the wake zones, the flow speed of the exhaust gas is much lower. The reducing agent is sprayed into these wake zones. The annular flow produced by the second flow path 7 forms a shielding flow surrounding the inner wake zone. The annular flow prevents dispersion of the reducing agent flow that is sprayed through the central nozzle 8. Also in the outer wake zone, the partial exhaust gas streams guide the reducing agent spray.

The outer nozzles 9 are configured to spray the reducing agent radially outwards from the longitudinal center axis of the noise attenuator 1. Preferably, the angle between the longitudinal center axis and the spraying direction is at least 45 degrees. The flow produced by the first flow path 6 forms a shielding flow around the outer nozzles 9. This allows spraying of the reducing agent towards the walls of the noise attenuator 1, since the contact between the walls and the reducing agent is avoided.

The dimensions of the noise attenuator 1 depend, for instance, on the available space, requirements set for the attenuation and flow stabilization effect, and acceptable pressure losses. Effective noise reduction can be achieved with suitable radial dimensions of the noise attenuator 1. The maximum frequency of the noise to be attenuated can be used as a starting point for determining the distance between the inner wall 3 and the inner pipe 4 and between the inner pipe 4 and the flow barrier 5. Effective attenuation can be achieved when each of these distances is approximately half of the wavelength of the sound at the maximum frequency to be attenuated. However, when selecting the dimensions, it also has to be ensured that effective mixing of the exhaust gas and the reducing agent is achieved and contact of the reducing agent with the inner wall 3 of the noise attenuator 1 is avoided. According to an embodiment of the invention, the length of the noise attenuator 1 is approximately five times the wavelength of the sound at the maximum frequency to be attenuated.

It will be appreciated by a person skilled in the art that the invention is not limited to the embodiments described above, but may vary within the scope of the appended claims.

## Claims

1. A noise attenuator (1) for an exhaust system of an internal combustion engine (20), the noise attenuator (1) comprising
- a casing (2),
- an inner wall (3) defining a cylindrical space within the casing (2), the axial direction of the cylindrical space corresponding to the principal flow direction of exhaust gas in the noise attenuator (1),
- an inner pipe (4) that is arranged coaxially with the inner wall (3) so that a first flow path (6) with an annular cross-section is formed between the inner wall (3) and the inner pipe (4) for exhaust gas stream,
- a flow barrier (5) with a circular cross-section, the flow barrier (5) being arranged coaxially with the inner pipe (4) so that a second flow path (7) with an annular cross-section is formed between the inner pipe (4) and the flow barrier (5) for exhaust gas stream, and
- at least one nozzle (8, 9) for introducing reducing agent into exhaust gas stream, the at least one nozzle (8, 9) being arranged in the flow direction of exhaust gas downstream from the inner pipe (4) and/or the flow barrier (5),
wherein the noise attenuator (1) is configured to divide the exhaust gas stream into at least two coaxial ring-shaped partial streams by means of the inner pipe (4) and the flow barrier (5),
**characterized in that** said at least one nozzle (8, 9) is at least one central nozzle (8) that is arranged in the area of an imaginary extension of the flow barrier (5) in the flow direction of exhaust gas, and/or a plurality of outer nozzles (9) that are arranged in the area of an imaginary extension of the inner pipe (4) in the flow direction of exhaust gas.

2. A noise attenuator (1) according to claim 1, wherein the outer nozzles (9) are configured to spray reducing agent outwards from the longitudinal axis of the noise attenuator (1).

3. A noise attenuator (1) according to claim 2, wherein the angle between the longitudinal axis of the noise attenuator (1) and the spraying direction is at least 45 degrees.

4. A noise attenuator (1) according to any of the preceding claims, wherein the flow barrier (5) is an elongated element, such as a bar or a closed pipe.

5. An exhaust system for an internal combustion engine (20), the exhaust system comprising a catalytic converter (36) for selective catalytic reduction and a noise attenuator (1) according to any of the preceding claims arranged on the upstream side of the catalytic converter (36).

6. A method of introducing reducing agent into exhaust gas stream of an internal combustion engine (20) for selective catalytic reduction, the method comprising a step of introducing exhaust gas stream into a noise attenuator (1), which noise attenuator (1) comprises
- a casing (2),
- an inner wall (3) defining a cylindrical space within the casing (2), the axial direction of the cylindrical space corresponding to the principal flow direction of exhaust gas in the noise attenuator (1),
- an inner pipe (4) that is arranged coaxially with the inner wall (3) so that a first flow path (6) with an annular cross-section is formed between the inner wall (3) and the inner pipe (4) for exhaust gas stream, and
- a flow barrier (5) with a circular cross-section, the flow barrier (5) being arranged coaxially with the inner pipe (4) so that a second flow path (7) with an annular cross-section is formed between the inner pipe (4) and the flow barrier (5) for exhaust gas stream,
wherein the noise attenuator (8) is configured to divide the exhaust gas stream into at least two coaxial ring-shaped partial streams by means of the inner pipe (4) and the flow barrier (5) and to further merge the partial streams back into a single exhaust gas stream, wherein the reducing agent is injected into the exhaust gas stream in the area where the partial streams are merged downstream from the inner pipe (4) and/or the flow barrier (5), **characterized in that** the reducing agent is injected by means of at least one central nozzle (8), which is arranged in the area of an imaginary extension of the flow barrier (5) in the flow direction of exhaust gas, and/or by means of a plurality of outer nozzles (9), which are arranged in the area of an imaginary extension of the inner pipe (4) in the flow direction of exhaust gas.

7. A method according to claim 6, wherein reducing agent is injected into the exhaust gas stream at a location, which is in the radial direction of the noise attenuator (1) in the middle of the exhaust gas stream.

8. A method according to claim 6 or 7, wherein reducing agent is injected into the exhaust gas stream at a plurality of locations, which are in the radial direction of the noise attenuator (1) between the partial streams.

## Patentansprüche

1. Geräuschdämpfer (1) für ein Abgassystem eines Verbrennungsmotors (20), wobei der Geräuschdämpfer (1) Folgendes umfasst
- ein Gehäuse (2),
- eine Innenwand (3), die einen zylindrischen Raum innerhalb des Gehäuses (2) definiert, wobei die axiale Richtung des zylindrischen Raums der Hauptströmungsrichtung des Abgases im Geräuschdämpfer (1) entspricht,
- ein Innenrohr (4), das koaxial zur Innenwand (3) angeordnet ist, so dass ein erster Strömungsweg (6) mit einem ringförmigen Querschnitt zwischen der Innenwand (3) und dem Innenrohr (4) für den Abgasstrom gebildet wird,
- eine Strömungsbarriere (5) mit kreisförmigem Querschnitt, wobei die Strömungsbarriere (5) koaxial zum Innenrohr (4) angeordnet ist, so dass ein zweiter Strömungsweg (7) mit einem ringförmigen Querschnitt zwischen dem Innenrohr (4) und der Strömungsbarriere (5) für den Abgasstrom gebildet wird, und
- mindestens eine Düse (8, 9) zum Einbringen von Reduktionsmittel in den Abgasstrom,
wobei die mindestens eine Düse (8, 9) in der Strömungsrichtung des Abgases stromabwärts von dem Innenrohr (4) und / oder der Strömungsbarriere (5) angeordnet ist,
wobei der Geräuschdämpfer (1) konfiguriert ist, um den Abgasstrom mittels des Innenrohrs (4) und der Strömungsbarriere (5) in mindestens zwei koaxiale ringförmige Teilströme aufzuteilen, **dadurch gekennzeichnet, dass** die mindestens eine Düse (8, 9) mindestens eine im Bereich einer imaginären Verlängerung der Strömungsbarriere (5) in Strömungsrichtung des Abgases angeordnete, zentrale Düse (8) und / oder eine Vielzahl von im Bereich einer imaginären Verlängerung des Innenrohrs (4) in Strömungsrichtung des Abgases angeordneten, äußeren Düsen (9) ist.

2. Geräuschdämpfer (1) nach Anspruch 1, wobei die äußeren Düsen (9) konfiguriert sind, um Reduktionsmittel von der Längsachse des Geräuschdämpfers (1) nach außen zu sprühen.

3. Geräuschdämpfer (1) nach Anspruch 2, wobei der Winkel zwischen der Längsachse des Geräuschdämpfers (1) und der Sprührichtung mindestens 45 Grad beträgt.

4. Geräuschdämpfer (1) nach einem der vorhergehenden Ansprüche, wobei die Strömungsbarriere (5) ein längliches Element ist, wie beispielsweise eine Stange oder ein geschlossenes Rohr.

5. Abgassystem für einen Verbrennungsmotor (20), wobei das Abgassystem einen Katalysator (36) zur selektiven katalytischen Reduktion und einen Geräuschdämpfer (1) gemäß einem der vorhergehenden Ansprüche umfasst, der auf der stromaufwärtigen Seite des Katalysators (36) angeordnet ist.

6. Verfahren zum Einführen eines Reduktionsmittels in den Abgasstrom eines Verbrennungsmotors (20) zur selektiven katalytischen Reduktion, wobei das Verfahren einen Schritt des Einführens eines Abgasstroms in einen Geräuschdämpfer (1) umfasst, wobei der Geräuschdämpfer (1) Folgendes umfasst
- ein Gehäuse (2),
- eine Innenwand (3), die einen zylindrischen Raum innerhalb des Gehäuses (2) definiert, wobei die axiale Richtung des zylindrischen Raums der Hauptströmungsrichtung des Abgases im Geräuschdämpfer (1) entspricht,
- ein Innenrohr (4), das koaxial zur Innenwand (3) angeordnet ist, so dass ein erster Strömungsweg (6) mit einem ringförmigen Querschnitt zwischen der Innenwand (3) und dem Innenrohr (4) für den Abgasstrom gebildet wird, und
- eine Strömungsbarriere (5) mit einem kreisförmigen Querschnitt, wobei die Strömungsbarriere (5) koaxial zum Innenrohr (4) angeordnet ist, so dass ein zweiter Strömungsweg (7) mit einem ringförmigen Querschnitt zwischen dem Innenrohr (4) und der Strömungsbarriere (5) für den Abgasstrom gebildet wird,
wobei der Geräuschdämpfer (8) konfiguriert ist, um den Abgasstrom mittels des Innenrohrs (4) und der Strömungsbarriere (5) in mindestens zwei koaxiale ringförmige Teilströme aufzuteilen, und um die Teilströme weiter zu einem einzigen Abgasstrom zusammenzuführen, wobei das Reduktionsmittel in dem Bereich, in dem die Teilströme stromabwärts von dem Innenrohr (4) und / oder der Strömungsbarriere (5) zusammengeführt werden, in den Abgasstrom eingespritzt wird, **dadurch gekennzeichnet, dass** das Reduktionsmittel mittels mindestens einer im Bereich einer imaginären Verlängerung der Strömungsbarriere (5) in Strömungsrichtung des Abgases angeordneten, zentralen Düse (8) und / oder mittels einer Vielzahl von im Bereich einer imaginären Verlängerung des Innenrohrs (4) in Strömungsrichtung des Abgases angeordneten, äußeren Düsen (9) eingespritzt wird.

7. Verfahren nach Anspruch 6, wobei Reduktionsmittel an einer Stelle in den Abgasstrom injiziert wird, die sich in radialer Richtung des Geräuschdämpfers (1) in der Mitte des Abgasstroms befindet.

8. Verfahren nach Anspruch 6 oder 7, wobei Reduktionsmittel an mehreren Stellen in den Abgasstrom eingespritzt wird, die sich in radialer Richtung des Geräuschdämpfers (1) zwischen den Teilströmen befinden.

## Revendications

1. Atténuateur de bruit (1) pour un système d'échappement d'un moteur à combustion interne (20), l'atténuateur de bruit (1) comprenant
- un carter (2),
- une paroi intérieure (3) définissant un espace cylindrique à l'intérieur du carter (2), la direction axiale de l'espace cylindrique correspondant à la direction d'écoulement principale de gaz d'échappement dans l'atténuateur de bruit (1),
- un tuyau intérieur (4) qui est disposé coaxialement avec la paroi intérieure (3) de sorte qu'un premier trajet d'écoulement (6) avec une section transversale annulaire est formé entre la paroi intérieure (3) et le tuyau intérieur (4) pour un flux de gaz d'échappement,
- une barrière d'écoulement (5) avec une section transversale circulaire, la barrière d'écoulement (5) étant disposée coaxialement avec le tuyau intérieur (4) de sorte qu'un second trajet d'écoulement (7) avec une section transversale annulaire est formé entre le tuyau intérieur (4) et la barrière d'écoulement (5) pour un flux de gaz d'échappement, et
- au moins une buse (8, 9) pour introduire un agent de réduction dans un flux de gaz d'échappement, l'au moins une buse (8, 9) étant disposée dans la direction d'écoulement de gaz d'échappement en aval du tuyau intérieur (4) et/ou de la barrière d'écoulement (5),
dans lequel l'atténuateur de bruit (1) est configuré pour diviser le flux de gaz d'échappement en au moins deux flux partiels en forme d'anneau coaxiaux au moyen du tuyau intérieur (4) et de la barrière d'écoulement (5), **caractérisé en ce que** ladite au moins une buse (8, 9) est au moins une buse centrale (8) qui est disposée dans la zone d'une extension imaginaire de la barrière d'écoulement (5) dans la direction d'écoulement de gaz d'échappement, et/ou une pluralité de buses extérieures (9) qui sont disposées dans la zone d'une extension imaginaire du tuyau intérieur (4) dans la direction d'écoulement de gaz d'échappement.

2. Atténuateur de bruit (1) selon la revendication 1, dans lequel les buses extérieures (9) sont configurées pour pulvériser un agent de réduction vers l'extérieur à partir de l'axe longitudinal de l'atténuateur de bruit (1) .

3. Atténuateur de bruit (1) selon la revendication 2, dans lequel l'angle entre l'axe longitudinal de l'atténuateur de bruit (1) et la direction de pulvérisation est d'au moins 45 degrés.

4. Atténuateur de bruit (1) selon l'une quelconque des revendications précédentes, dans lequel la barrière d'écoulement (5) est un élément allongé, tel qu'une barre ou un tuyau fermé.

5. Système d'échappement pour un moteur à combustion interne (20), le système d'échappement comprenant un convertisseur catalytique (36) pour une réduction catalytique sélective et un atténuateur de bruit (1) selon l'une quelconque des revendications précédentes disposé sur le côté amont du convertisseur catalytique (36).

6. Procédé d'introduction d'agent de réduction dans un flux de gaz d'échappement d'un moteur à combustion interne (20) pour une réduction catalytique sélective, le procédé comprenant une étape d'introduction de flux de gaz d'échappement dans un atténuateur de bruit (1), lequel atténuateur de bruit (1) comprend
- un carter (2),
- une paroi intérieure (3) définissant un espace cylindrique à l'intérieur du carter (2), la direction axiale de l'espace cylindrique correspondant à la direction d'écoulement principale de gaz d'échappement dans l'atténuateur de bruit (1),
- un tuyau intérieur (4) qui est disposé coaxialement avec la paroi intérieure (3) de sorte qu'un premier trajet d'écoulement (6) avec une section transversale annulaire est formé entre la paroi intérieure (3) et le tuyau intérieur (4) pour un flux de gaz d'échappement, et
- une barrière d'écoulement (5) avec une section transversale circulaire, la barrière d'écoulement (5) étant disposée coaxialement avec le tuyau intérieur (4) de sorte qu'un second trajet d'écoulement (7) avec une section transversale annulaire est formé entre le tuyau intérieur (4) et la barrière d'écoulement (5) pour un flux de gaz d'échappement,
dans lequel l'atténuateur de bruit (8) est configuré pour diviser le flux de gaz d'échappement en au moins deux flux partiels en forme d'anneau coaxiaux au moyen du tuyau intérieur (4) et de la barrière d'écoulement (5) et pour fusionner davantage les flux partiels à nouveau en un flux de gaz d'échappement unique, dans lequel l'agent de réduction est injecté dans le flux de gaz d'échappement dans la zone où les flux partiels sont fusionnés en aval du tuyau intérieur (4) et/ou de la barrière d'écoulement (5), **caractérisé en ce que** l'agent de réduction est injecté au moyen d'au moins une buse centrale (8), qui est disposée dans la zone d'une extension imaginaire de la barrière d'écoulement (5) dans la direction d'écoulement de gaz d'échappement, et/ou au moyen d'une pluralité de buses externes (9), qui sont disposées dans la zone d'une extension imaginaire du tuyau intérieur (4) dans la direction d'écoulement de gaz d'échappement.

7. Procédé selon la revendication 6, dans lequel un agent de réduction est injecté dans le flux de gaz d'échappement au niveau d'un emplacement, qui est dans la direction radiale de l'atténuateur de bruit (1) au milieu du flux de gaz d'échappement.

8. Procédé selon la revendication 6 ou 7, dans lequel un agent de réduction est injecté dans le flux de gaz d'échappement au niveau d'une pluralité d'emplacements, qui sont dans la direction radiale de l'atténuateur de bruit (1) entre les flux partiels.
